# EUROPEAN PATENT APPLICATION

(11) **EP 4 834 982 A1**
(43) Date of publication of application: **04.11.2026**
(21) Application number: 24912057.7
(22) Date of filing: 12.11.2024
(51) Int. Cl.: C08J 11/10

(54) **SYNTHETIC RESIN DEGRADATION METHOD**

(30) Priority: 30.12.2023 JP 2023223831
(71) Applicant: National Institute of Advanced Industrial Science and Technology, Chiyoda-ku Tokyo 100-8921 (JP)
(72) Inventor: MINAMI, Yasunori, Tsukuba-shi, Ibaraki 305-8560 (JP); SATO, Kazuhiko, Tsukuba-shi, Ibaraki 305-8560 (JP)
(74) Representative: van Dam, Vincent
(86) International application number: PCT/JP2024/040082
(87) International publication number: WO 2025/142164

(57) **Abstract**

[Object]

To provide an epoxy resin decomposition method for decomposing synthetic resin which contains epoxy resin obtained by bonding an epoxy resin monomer having an epoxy group, with at least one of a diamine compound, a monoamine compound, an acid anhydride, a dithiol compound, and an imidazole compound which can bond to the epoxy group.

[Solution]

Synthetic resin, a base, and an organic solvent containing at least one of 1,3-dimethyl-2-imidazolidinone, 1,3-dimethylpropylene urea, tetramethylurea, N,N-dimethylacetamide, N,N-dimethylformamide, N-methyl-2-pyrrolidone, and dimethyl sulfoxide are mixed.

## Description

### Technical Field

The present invention relates to a synthetic resin decomposition method for synthetic resin, which includes epoxy resin obtained by bonding an epoxy resin monomer having an epoxy group with at least one of a diamine compound, a monoamine compound, an acid anhydride, a dithiol compound, and an imidazole compound which can bond to the epoxy group.

### Background Art

Thermosetting resins are robust and stable resins used in a variety of applications, including adhesives, packaging materials, and semiconductor encapsulants. Further, the properties of thermosetting resins can be enhanced by mixing them with glass fibers, carbon fibers, or the like.

As of 2019, thermosetting resins have accounted for approximately 10% of total resin production, and given their properties, they will continue to be an indispensable material in industrial society.

Furthermore, epoxy resin, a type of thermosetting resin, is a thermosetting resin possessing excellent electrical insulation, heat resistance, mechanical strength, and the like, and is widely used as a material for various electrical components, electronic components, automotive parts, and the like. This epoxy resin can be obtained, for example, by mixing a prepolymer such as a copolymer of bisphenol A and epichlorohydrin with a curing agent such as a polyamine and acid anhydride and then performing a heat curing treatment.

However, once cured, epoxy resin is not easily softened or melted by heat and has low solubility in solvents, making it difficult to be decomposed and posing problems such as environmental impact.

In response to this situation, methods for decomposing epoxy resins have been proposed. For example, Patent Literature 1 has proposed a decomposition method in which an epoxy resin cured material containing silica is decomposed by bringing it into contact with subcritical water containing at least one alkali selected from an alkali metal salt and an alkali metal hydroxide.

Further, Non-Patent Literature 1 has proposed a method for decomposing an epoxy resin cured material cured with a low-viscosity primary amine by heating it in toluene at 190°C using sodium hydroxide.

Furthermore, Non-Patent Literature 2 has proposed a method for heating non-crosslinked epoxy resins, which have cured with low-viscosity primary amines, at 160°C in 1,4-dioxane or a mixed solvent of tetrahydrofuran and toluene using potassium tert-butoxide; and a method in which partially crosslinked epoxy resin cured materials, which have cured with low-viscosity primary amines, are first pre-treated by exposing them to microwaves at 200°C in 1,4-dioxane, and then heated at 160°C in a mixed solvent of tetrahydrofuran and toluene using potassium tert-butoxide.

Furthermore, Non-Patent Literature 3 has proposed a method in which crosslinked epoxy resin fallout is heated at 200°C in an N-methylpyrrolidone solvent using a nickel complex catalyst and hydrogen molecules.

### Citation List

### Patent Literature

Patent Literature 1: Japanese Unexamined Patent Application Publication No. 2012-188466

### Non-Patent Literature

Non-Patent Literature 1: Hongwei Sun, Alexander Ahrens, Gabriel Martins Ferreira Batista, Bjarke S. Donslund, Anne. K. Ravn, Emil Vincent Schwibinger, Ainara Nova Flores, Troels Skrydstrup ChemRxiv. DOI: 10.26434/chemrxiv-2023-207wl.
Non-Patent Literature 2: Rebecca C. DiPucchio, Katherine R. Stevenson, Ciaran W. Lahive, William E. Michener, and Gregg T. Beckham ACS Sustainable Chem. Eng. DOI: 10.1021/acssuschemeng.3c04181.
Non-Patent Literature 3: Yumeng Liao, Kohei Takahashi, and Kyoko Nozaki J. Am. Chem. Soc. DOI: 10.1021/jacs.3c09061.

### Summary of Invention

### Technical Problem

However, the epoxy resin decomposition methods described in Patent Literature 1 and Non-Patent Literatures 1 to 3 require high temperatures and high pressures, which have had a problem in that disposing of large quantities of epoxy resin requires a significant amount of energy. Further, these decomposition methods have had a problem of requiring the use of equipment capable of withstanding such high temperatures and high pressures.

Further, the epoxy resin decomposition method described in Non-Patent Literature 1 has the problem in that, when using commercially available composite epoxy resin, it is necessary to immerse it overnight in a 75% acetic acid aqueous solution at 70°C before decomposition, resulting in low decomposition efficiency of epoxy resin. Furthermore, the epoxy resin decomposition method described in Non-Patent Literature 2 has the problem in that, when using epoxy resin cured materials with higher hardness, the above-mentioned pre-treatment is required. In addition, the epoxy resin decomposition methods described in Non-Patent Literatures 1 and 2 have the problem of low versatility, such as not being applicable to epoxy resin cured materials crosslinked with more highly superior aromatic diamines. Furthermore, the epoxy resin decomposition method described in Non-Patent Literature 3 has problems, such as the need to use expensive and scarce transition metals as catalysts and the requirement to use hydrogen gas.

In view of the circumstances described above, the present invention aims to provide a synthetic resin decomposition method which can efficiently decompose epoxy resins contained in synthetic resins under milder conditions compared to conventional decomposition methods.

### Solution to Problem

The inventor of the present invention has continued to conduct extensive research concerning the above-mentioned problems, and as a result has discovered the following revolutionary synthetic resin decomposition method for decomposing synthetic resins containing epoxy resins.

A first aspect of the present invention to solve the above-mentioned problems is a synthetic resin decomposition method for decomposing synthetic resin which contains epoxy resin obtained by bonding an epoxy resin monomer, which is represented by at least one of chemical formulae (A1) to (A8) and has an epoxy group, with at least one of a diamine compound, a monoamine compound, an acid anhydride, a dithiol compound, and an imidazole compound which can bond to the epoxy group, and the synthetic resin decomposition method includes a decomposition process for decomposing the epoxy resin contained in the synthetic resin by mixing the synthetic resin, a base, and an organic solvent containing at least one of 1,3-dimethyl-2-imidazolidinone, 1,3-dimethylpropylene urea, tetramethylurea, N,N-dimethylacetamide, N,N-dimethylformamide, N-methyl-2-pyrrolidone, and dimethyl sulfoxide.

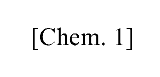

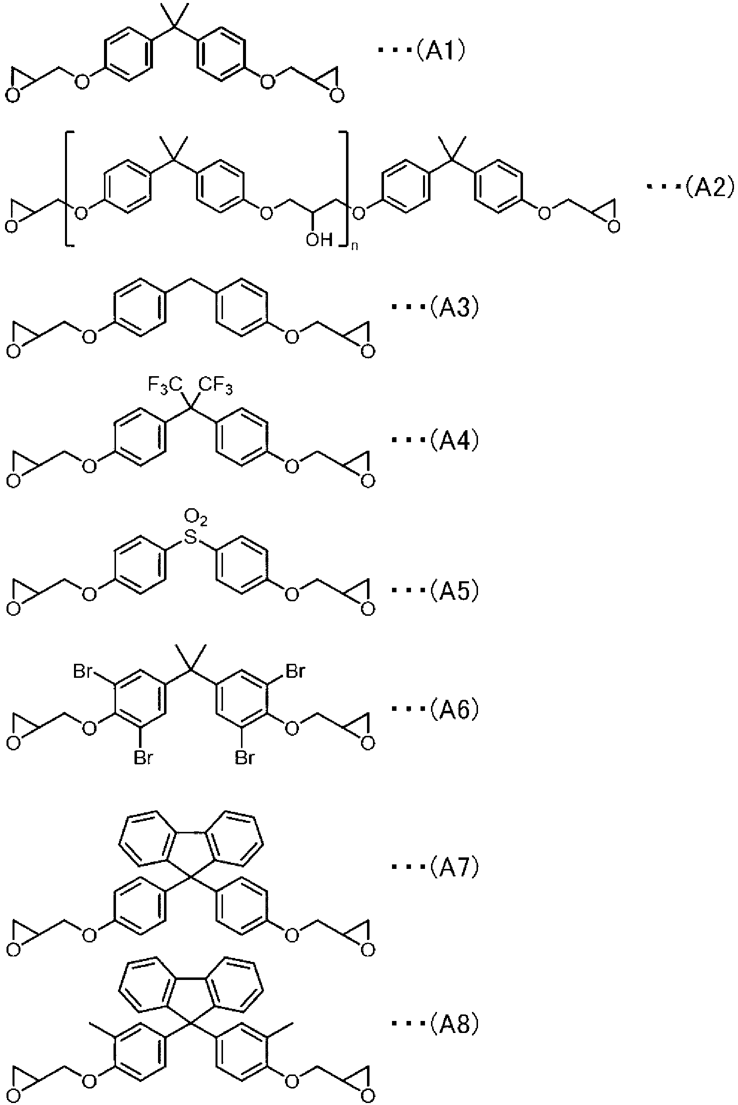

Here, n represents an arbitrary natural number in the above chemical formulae.

According to the first aspect, the epoxy resin contained in the synthetic resin can be efficiently decomposed.

A second aspect of the present invention is the synthetic resin decomposition method according to the first aspect, in which an amount of the organic solvent is 0.1 to 5 moles relative to a unit mole of the epoxy resin monomer.

According to the second aspect, the epoxy resin contained in the synthetic resin can be more efficiently decomposed.

A third aspect of the present invention is the synthetic resin decomposition method according to the first aspect, in which the base includes at least one of sodium hydroxide, potassium hydroxide, cesium hydroxide, sodium tert-butoxide, lithium tert-butoxide, potassium tert-butoxide, lithium bistrimethylsilylamide, sodium bistrimethylsilylamide, and potassium bistrimethylsilylamide.

According to the third aspect, the epoxy resin contained in the synthetic resin can be more efficiently decomposed.

A fourth aspect of the present invention is the synthetic resin decomposition method according to the first aspect, in which an amount of the base is 2 to 12 equivalents relative to an amount of an epoxy resin monomer structural unit used to obtain the epoxy resin.

Here, the epoxy resin monomer structural unit refers to an epoxy resin monomer used to obtain epoxy resin, from which two epoxy groups located at both ends are removed as shown in the following chemical formula. 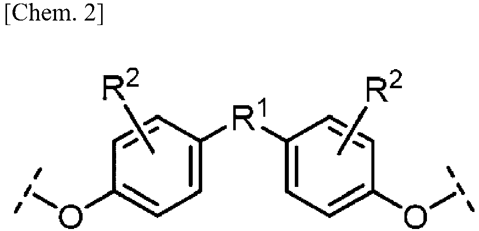 In this chemical formula, R¹ represents, for example, a carbon functional group such as dimethylmethylene, methylene, bistrifluoromethyl methylene, and 9,9-fluorenyl, a sulfur functional group such as sulfonyl and sulfanyl, or the like. Further, R² represents, for example, hydrogen, a carbon functional group such as a methyl group, or a halogen such as bromine, at any position on the benzene ring.

Specifically, examples of the epoxy resin monomer structural unit include those shown in the following respective chemical formulae (a1) to (a8), for the epoxy resin monomers of the chemical formulae (A1) to (A8) described above. Here, the epoxy resin monomer structural unit corresponding to the epoxy resin monomer of the chemical formula (A1) is that shown in the chemical formula (a1), and the same relationship applies to the others.

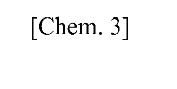

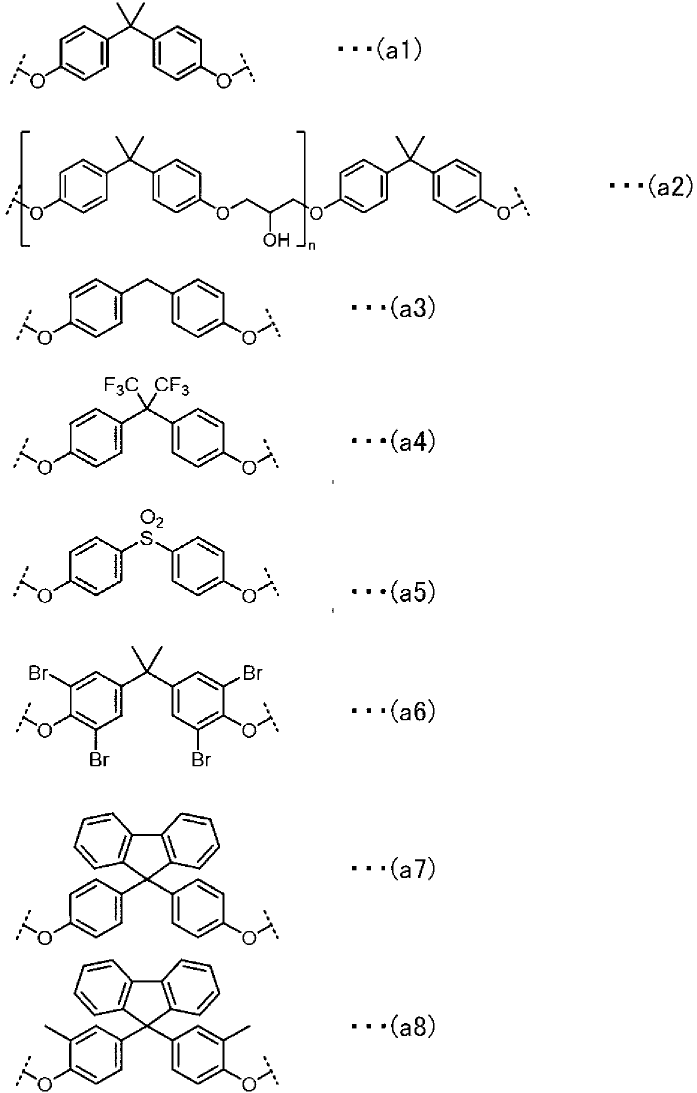

Here, n represents an arbitrary natural number in the above chemical formulae.

According to the fourth aspect, the epoxy resin contained in the synthetic resin can be further efficiently decomposed.

A fifth aspect of the present invention is the synthetic resin decomposition method according to any one of the first to fourth aspects, in which the diamine compound is a compound represented by chemical formulae (B1) to (B7), the monoamine compound is a compound represented by the following chemical formula (B8), the acid anhydride is a compound represented by the following chemical formulae (B9) and (B10), and the dithiol compound is a compound represented by the following chemical formula (B11).

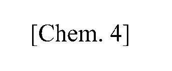

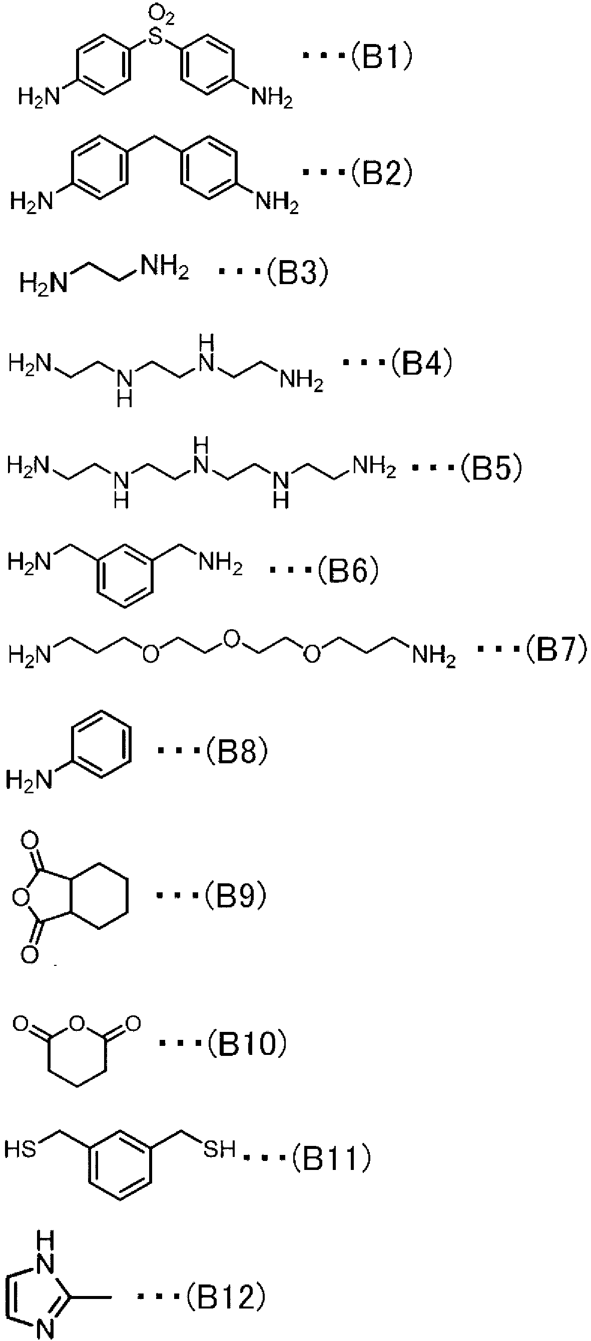

According to the fifth aspect, the epoxy resin contained in the synthetic resin can be more efficiently decomposed.

A sixth aspect of the present invention is the synthetic resin decomposition method according to the first aspect, in which a reaction temperature during the decomposition process is within a range of 100°C to 160°C.

Although bisphenol A is known to decompose at high temperatures (190°C) (see Non-Patent Literature 1), according to the sixth aspect, by performing the reaction at a low reaction temperature (for example, 100°C to 160°C), the epoxy resin monomer (for example, bisphenol A and the like) used to obtain the epoxy resin and generated when the epoxy resin is decomposed can be recovered without decomposing the epoxy resin monomer.

### Brief Description of Drawings

[Fig. 1] Fig. 1 is a drawing showing a chemical reaction formula according to Examples 1 to 17.
[Fig. 2] Fig. 2 is a table showing reaction conditions and yields of bisphenol A according to Examples 1 to 17.
[Fig. 3] Fig. 3 is a drawing showing a chemical reaction formula according to Example 18.
[Fig. 4] Fig. 4 is a drawing showing a chemical reaction formula according to Example 19.
[Fig. 5] Fig. 5 is a drawing showing a chemical reaction formula according to Example 20.
[Fig. 6] Fig. 6 is a drawing showing a chemical reaction formula according to Example 21.
[Fig. 7] Fig. 7 is a drawing showing a chemical reaction formula according to Example 22.
[Fig. 8] Fig. 8 is a drawing showing a chemical reaction formula according to Example 23.
[Fig. 9] Fig. 9 is a drawing showing a chemical reaction formula according to Example 24.
[Fig. 10] Fig. 10 is a drawing showing a chemical reaction formula according to Example 25.
[Fig. 11] Fig. 11 is a drawing showing a chemical reaction formula according to Example 26.
[Fig. 12] Fig. 12 is a drawing showing a chemical reaction formula according to Example 27.
[Fig. 13] Fig. 13 is a drawing showing a chemical reaction formula according to Example 28.
[Fig. 14] Fig. 14 shows SEM images of a carbon fiber surface in Example 29.
[Fig. 15] Fig. 15 is a drawing showing a chemical reaction formula according to Example 29.
[Fig. 16] Fig. 16 shows SEM images of a carbon fiber surface in Example 30.
[Fig. 17] Fig. 17 is a drawing showing a chemical reaction formula according to Example 30.

### Description of Embodiments

Embodiments of a synthetic resin decomposition method according to the present invention for synthetic resin containing epoxy resin will be described below with reference to the accompanying drawings. However, note that the present invention is not limited to the following embodiments.

### (Embodiment 1)

### <<Synthetic resin decomposition method>>

A method for decomposing synthetic resin containing epoxy resin according to the present embodiment is an epoxy resin decomposition method for decomposing synthetic resin containing epoxy resin obtained by bonding an epoxy resin monomer, which is represented by at least one of the following chemical formulae (A1) to (A8) and has an epoxy group, with at least one of a diamine compound, a monoamine compound, an acid anhydride, a dithiol compound, and an imidazole compound which can bond to the epoxy group, and the synthetic resin decomposition method includes a decomposition process for decomposing the epoxy resin contained in the synthetic resin by mixing synthetic resin, a base, and an organic solvent containing at least one of 1,3-dimethyl-2-imidazolidinone, 1,3-dimethylpropylene urea, tetramethylurea, N,N-dimethylacetamide, N,N-dimethylformamide, N-methyl-2-pyrrolidone, and dimethyl sulfoxide.

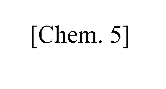

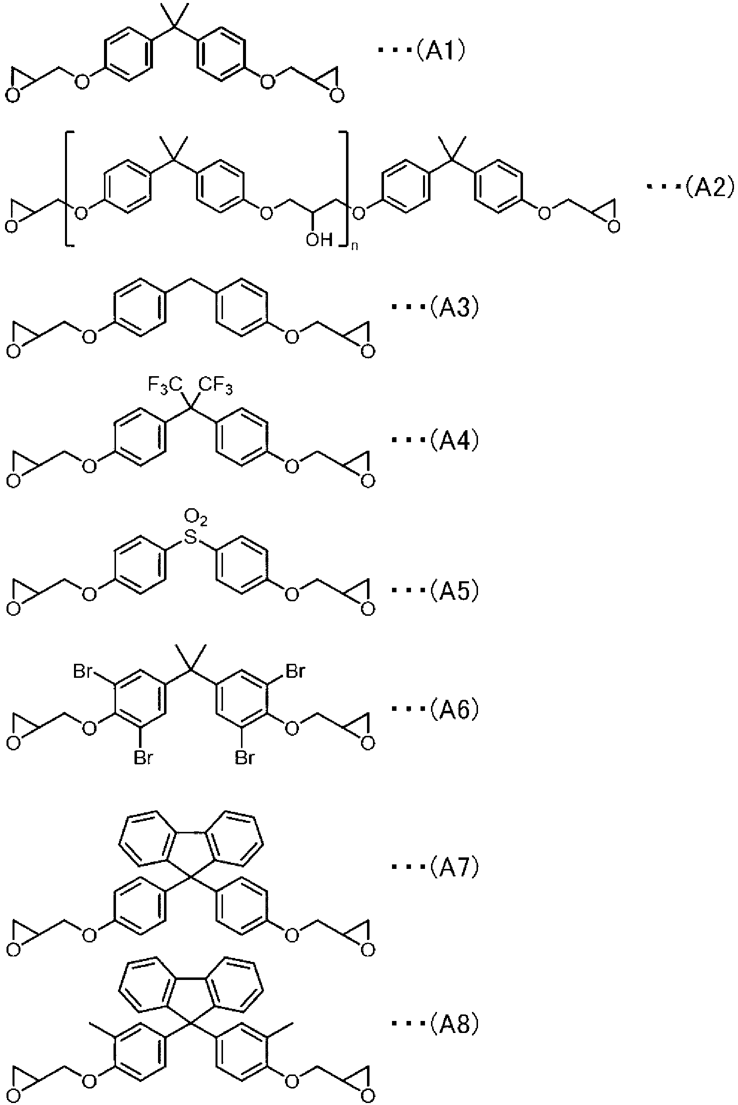

Here, n represents an arbitrary natural number in the above chemical formulae.

According to the synthetic resin decomposition method of the present embodiment, epoxy resin can be efficiently decomposed at a low reaction temperature (for example, 80°C to 200°C). In addition, when the reaction temperature is lower than 190°C (for example, 80°C to 180°C), the epoxy resin monomer (for example, bisphenol A and the like) used to obtain the epoxy resin and generated when the epoxy resin is decomposed can be recovered without decomposing the epoxy resin monomer.

### <Synthetic resin>

Synthetic resin to be decomposed in the synthetic resin decomposition method according to the present embodiment (target synthetic resin) is not particularly limited as long as the synthetic resin contains epoxy resin obtained by bonding an epoxy resin monomer, which is represented by at least one of the above chemical formulae (A1) to (A8) and has an epoxy group, with at least one of a diamine compound, a monoamine compound, an acid anhydride, a dithiol compound, and an imidazole compound which can bond to the epoxy group. In other words, the target synthetic resin may be a compound formed by bonding a single type of epoxy resin monomer with one (only a single type of compound) from among a diamine compound, a monoamine compound, an acid anhydride, a dithiol compound, and an imidazole compound which can bond to the epoxy group, or the target synthetic resin may be a compound formed by bonding a plurality of types of epoxy resin monomers with a plurality of types of compounds from among a diamine compound, a monoamine compound, an acid anhydride, a dithiol compound, and an imidazole compound which can bond to epoxy groups. Here, the proportion (% by weight) of epoxy resin contained in the synthetic resin is not particularly limited, and a higher percentage by weight of epoxy resin is preferable (for example, 80% to 100% by weight), and the percentage may be 100% by weight. Furthermore, the above-mentioned epoxy resin and synthetic resin can be manufactured by known manufacturing methods.

Here, the diamine compound is not particularly limited as long as it is a compound having two nitrogen atoms, each bonded to at least one hydrogen atom. The monoamine compound is not particularly limited as long as it is a compound having one nitrogen atom bonded to two hydrogen atoms. The acid anhydride is not particularly limited as long as it is a compound formed by dehydration condensation of two oxoacid molecules. The dithiol compound is not particularly limited as long as it is a compound having two thiol groups. The imidazole compound is not particularly limited as long as it is a compound having an imidazole group.

Here, the diamine compound is, for example, a compound represented by chemical formulae (B1) to (B7); the monoamine compound is, for example, a compound represented by chemical formula (B8); the acid anhydride is, for example, a compound represented by chemical formulae (B9) and (B10); the dithiol compound is, for example, a compound represented by chemical formula (B11); and the imidazole compound is, for example, a compound represented by chemical formula (B12).

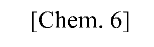

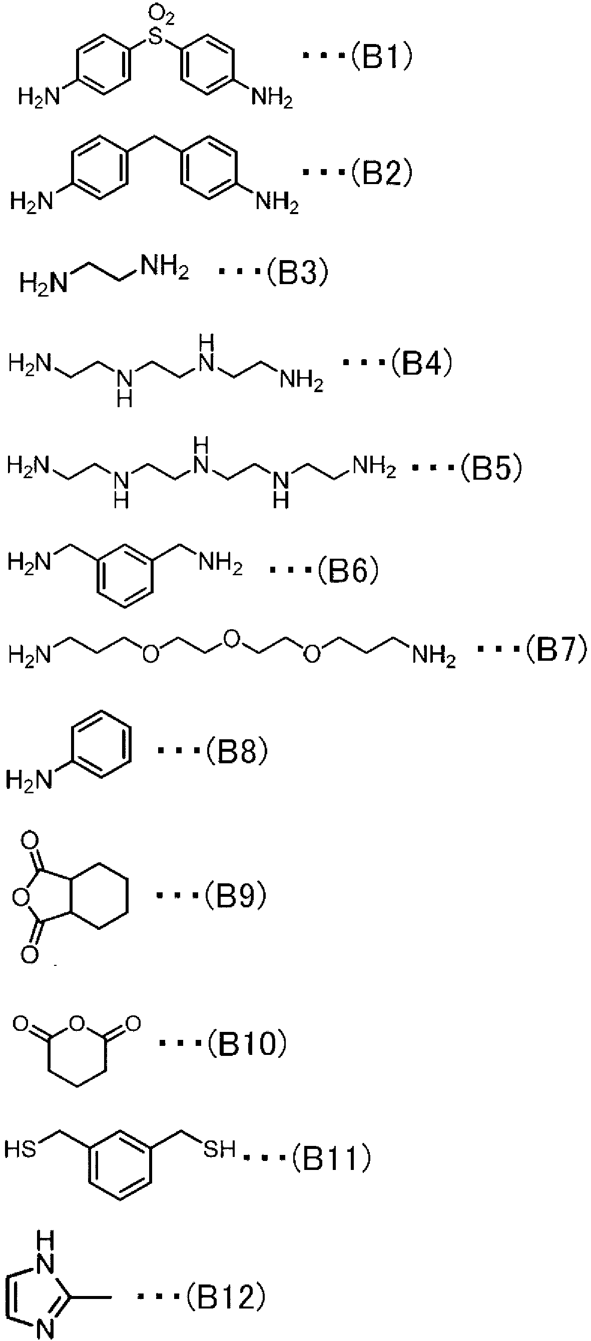

Here, the synthetic resin may contain components other than epoxy resin. Specifically, the synthetic resin may contain polyester, polyamide, polycarbonate, polyfluorocarbon, carbon fiber, glass fiber, water, and the like. Even if these components are contained, according to the synthetic resin decomposition method of the present invention, epoxy resin contained in synthetic resin can be decomposed.

### <Base>

In the synthetic resin decomposition method according to the present embodiment, the base is not particularly limited. Examples of the base include sodium hydroxide, potassium hydroxide, cesium hydroxide, sodium tert-butoxide, lithium tert-butoxide, potassium tert-butoxide, lithium bistrimethylsilylamide, sodium bistrimethylsilylamide, and potassium bistrimethylsilylamide; and only a single type of these may be used or a plurality of types of these may be used. Using these bases makes decomposition of synthetic resins easier.

In the synthetic resin decomposition method according to the present embodiment, the amount of the base is not particularly limited, but it is preferable to react it at 2 to 12 equivalents, more preferably 2 to 8 equivalents, even more preferably 2 to 6 equivalents, and especially preferably 3.5 to 4.5 equivalents, relative to the amount of the epoxy resin monomer structural unit represented by at least one of the following chemical formulae (a1) to (a8) and used to obtain the epoxy resin. The epoxy resin monomer structural unit may be composed of a single type of compound, or it may be composed of a plurality of types of compounds in proportion corresponding to those used in the synthesis of the epoxy resin, as long as it/they is/are used to obtain the corresponding epoxy resin.

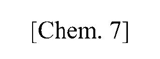

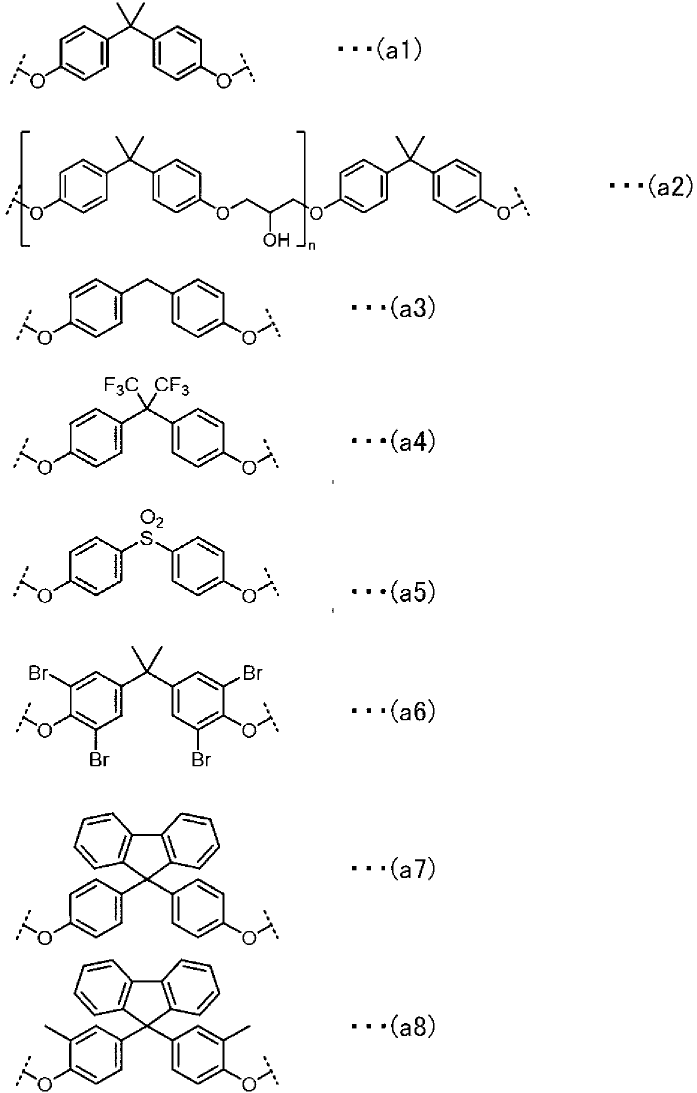

Here, n represents an arbitrary natural number in the above chemical formulae.

### <Organic solvent>

In the synthetic resin decomposition method according to the present embodiment, the organic solvent which can be used is not particularly limited as long as it contains at least one of 1,3-dimethyl-2-imidazolidinone, 1,3-dimethylpropylene urea, tetramethylurea, N,N-dimethylacetamide, N,N-dimethylformamide, N-methyl-2-pyrrolidone, and dimethyl sulfoxide, but it is preferable that it contains only 1,3-dimethyl-2-imidazolidinone. Using these organic solvents makes it easier to decompose epoxy resins contained in synthetic resins. Here, the organic solvent may be a mixture of a plurality of compounds, not only one of the compounds mentioned above. Further, the organic solvent may be solely composed of the compounds mentioned above (100% by weight), but it may also contain substances other than the compounds mentioned above.

The amount of the above-mentioned organic solvent is not particularly limited, but it is preferable to react it at a molar concentration of 0.1 to 5, more preferably at a molar concentration of 0.2 to 2, and especially preferably at a molar concentration of 0.25 to 1 relative to the epoxy resin monomer unit mole of the synthetic resin.

### <Reaction condition in decomposition process>

Decomposition of the synthetic resin according to the present embodiment is performed by mixing synthetic resin, a base, and an organic solvent containing at least one of 1,3-dimethyl-2-imidazolidinone, 1,3-dimethylpropylene urea, tetramethylurea, N,N-dimethylacetamide, N,N-dimethylformamide, N-methyl-2-pyrrolidone, and dimethyl sulfoxide.

The order of mixing (blending) these materials (substances) is not particularly limited, but examples of the order include first mixing the synthetic resin and base and then adding the organic solvent; and preparing a raw material composition which is a mixture of the base and the organic solvent, and then mixing this raw material composition with the synthetic resin.

In addition, the synthetic resin decomposition method according to the present embodiment can be performed in an inert gas (for example, argon, nitrogen, and the like) atmosphere or in an air atmosphere. Further, the reaction temperature during the decomposition of synthetic resin (the reaction temperature during the decomposition process) is not particularly limited, but the temperature within a range of 80°C to 200°C is preferable, as this allows for easy decomposition of the epoxy resin contained in the synthetic resin. Furthermore, it is more preferable if the reaction temperature during the decomposition process is within a range of 100°C to 160°C, as this not only makes it easier to decompose the epoxy resin contained in the synthetic resin but also makes it possible to recover the epoxy resin monomer (used to obtain the corresponding epoxy resin), which is generated when this epoxy resin is decomposed, without decomposing the epoxy resin monomer. Furthermore, it is especially preferable if the reaction temperature during the decomposition process is within a range of 140°C to 150°C, as this not only makes it still easier to decompose the epoxy resin contained in the synthetic resin but also makes it possible to recover the epoxy resin monomer (used to obtain the corresponding epoxy resin), which is generated when this epoxy resin is decomposed, without decomposing the epoxy resin monomer.

In addition, the time required for the reaction process is not particularly limited, but a range from 1 to 40 hours is preferable and a range from 7 to 10 hours is more preferable. Further, in the decomposition process, it is preferable to stir the mixture composed of the synthetic resin, the base, and the organic solvent by known means.

### <<Method for recovering bisphenol A and the like>>

A synthetic resin decomposition product produced by the synthetic resin decomposition method according to the present embodiment contains a predetermined bisphenol and a predetermined bisphenol ether, as well as low-molecular-weight oligomers and polymers derived from a curing agent that can be separated from these bisphenol and bisphenol ether. Accordingly, by using this synthetic resin decomposition method, bisphenol A can be recovered from epoxy resin. Here, the bisphenol ether can ultimately yield a predetermined bisphenol through a known hydrolysis reaction.

Next, the synthetic resin decomposition method according to the present invention will be described more specifically and in detail with reference to examples, but the present invention is not limited to the following examples.

### <Examples (Entries) 1 to 17>

To verify in detail the synthetic resin decomposition method according to the present embodiment, an epoxy resin monomer in which the hydrogen atoms at both ends of bisphenol A were substituted with glycidyl groups was mixed with 4,4'-diaminodiphenyl sulfone in a molar ratio of 1:1, and the resulting mixture was heated at 180°C for 5 hours to obtain cured resin. Subsequently, the cured resin was ground, and depolymerization was verified using the resulting powdered epoxy resin (1) (synthetic resin consisting of 100% epoxy resin).

Under an argon atmosphere, a base and an organic solvent (solvent) were sequentially added to a predetermined amount (0.10 mmol, calculated relative to the molar weight of the monomer) of the powdered epoxy resin (1), and the resulting reaction mixture was then stirred while being heated. Thereafter, the reaction mixture was returned to room temperature (25°C), and hydrochloric acid was added to quench (terminate) the reaction.

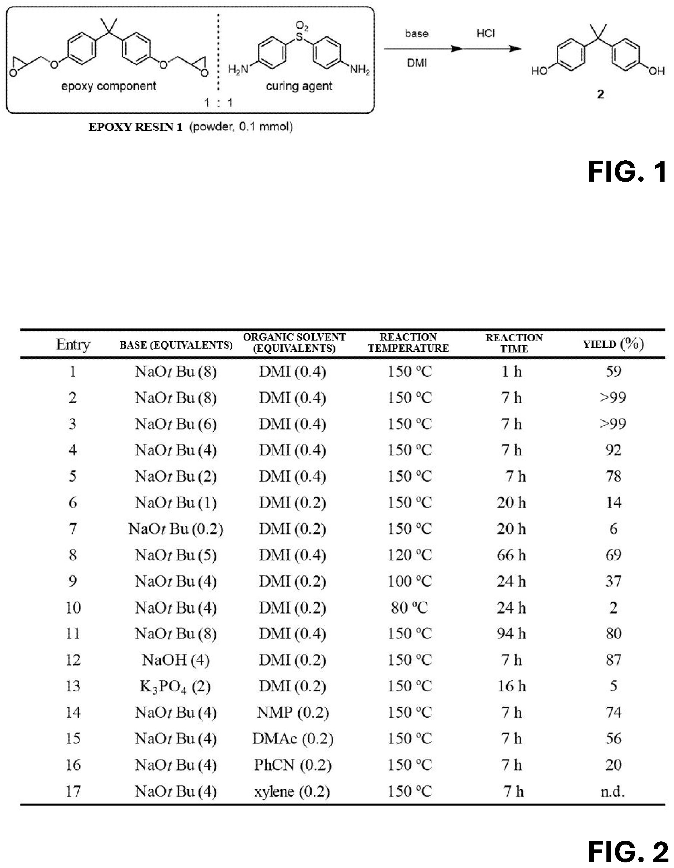

Next, ethyl acetate was added to the reaction mixture, and an organic layer was extracted from the resulting two-layer solution, and a crude product was obtained by drying with magnesium sulfate and evaporation under reduced pressure. Using mesitylene as an internal standard substance and deuterated chloroform, the crude product was subjected to ¹H NMR so as to measure the yield of bisphenol A obtained in accordance with the chemical reaction formula shown in Fig. 1. The results are shown in Fig. 2.

As can be seen from this drawing, it was found that the synthetic resin decomposition method of the present example allows for easy decomposition of the powdered epoxy resin (1).

### <Example 18>

Under an argon atmosphere, 384 mg (4.0 mmol) of sodium tert-butoxide and 2.0 mL of 3-dimethyl-2-imidazolidinone (DMI) were sequentially added to 589 mg (1.0 mmol, calculated relative to the molar weight of the epoxy resin monomer) of powdered epoxy resin (1), and the resulting reaction mixture was then stirred while being heated at 150°C for 7 hours. Thereafter, the reaction mixture was returned to room temperature (25°C), and pure water was added to precipitate a solid. Next, a solid component was separated from the aqueous solution by decanting, and hydrochloric acid was added to the solid component.

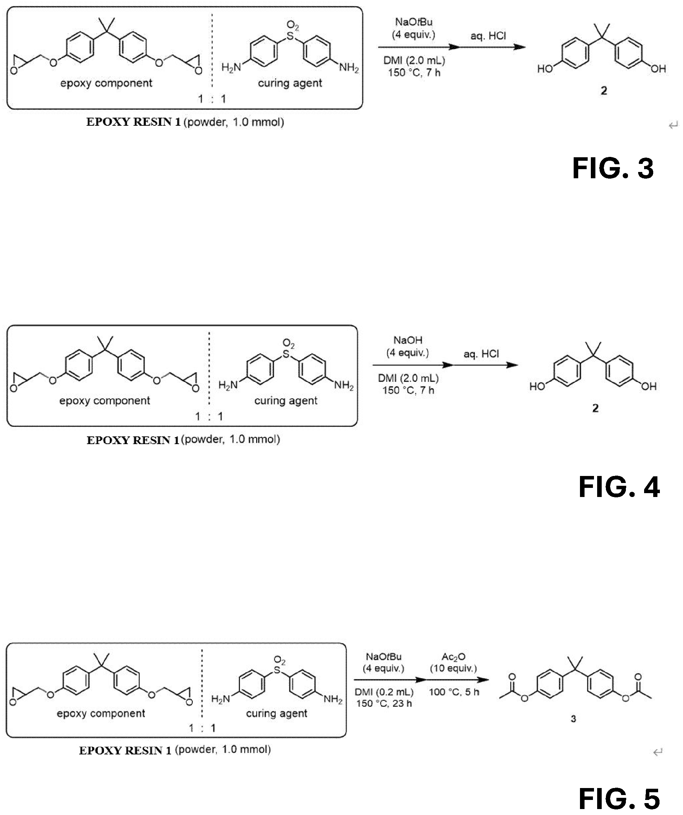

Subsequently, organic matter was extracted from the solid component using acetic acid, and a solvent was removed by evaporation under reduced pressure (distillation under reduced pressure) to obtain a crude product. This crude product was subjected to silica gel chromatography (developing solvent: mixed solvent of hexane and ethyl acetate, volume ratio 6:4) to obtain bisphenol A (recovery amount: 216 mg, 0.94 mmol, yield 94%), which is obtained in accordance with the chemical reaction formula shown in Fig. 3. In other words, it was found that the synthetic resin decomposition method of the present example allows for easy and sufficient decomposition of the powdered epoxy resin (1).

Bisphenol A: ¹H NMR (600 MHz, acetone-d₆) δ 1.58 (s, 6H), 6.72 (AA'BB', 4H), 7.05 (AA'BB', 4H), 8.11 (br, 2H).

### <Example 19>

Under an argon atmosphere, 160 mg (4.0 mmol) of sodium hydroxide and 2.0 mL of 3-dimethyl-2-imidazolidinone (DMI) were sequentially added to 589 mg (1.0 mmol, calculated relative to the molar weight of the monomer) of powdered epoxy resin (1), and the resulting reaction mixture was then stirred while being heated at 150°C for 7 hours. Thereafter, the reaction mixture was returned to room temperature (25°C), and pure water was added to precipitate a solid.

Next, a solid component was separated from the aqueous solution by decanting, and hydrochloric acid was added to the solid component. Subsequently, organic matter was extracted from the solid component using ethyl acetate, and a solvent was removed by evaporation under reduced pressure to obtain a crude product. This crude product was subjected to silica gel chromatography (developing solvent: mixed solvent of hexane and ethyl acetate, volume ratio 6:4) to obtain bisphenol A (recovery amount: 140 mg, 0.61 mmol, yield 61%), which is obtained in accordance with the chemical reaction formula shown in Fig. 4. In other words, it was found that the synthetic resin decomposition method of the present example allows for easy decomposition of the powdered epoxy resin (1).

### <Example 20>

Under an argon atmosphere, 38.4 mg (0.4 mmol) of sodium tert-butoxide and 0.2 mL of 3-dimethyl-2-imidazolidinone (DMI) were sequentially added to 59.1 mg (0.1 mmol, calculated relative to the molar weight of the epoxy resin monomer) of powdered epoxy resin (1), and the resulting reaction mixture was then stirred while being heated at 150°C for 23 hours. Thereafter, the reaction mixture was returned to room temperature (25°C), 94.5 µL (1.0 mmol) of acetic anhydride was added, and the resulting mixture was stirred while being heated at 100°C for 5 hours.

Next, ethyl acetate was added to the reaction mixture, and after the generated solid precipitate was removed by filtration, a crude product was obtained by evaporation under reduced pressure. This crude product was subjected to silica gel chromatography (developing solvent: mixed solvent of hexane and ethyl acetate, volume ratio 6:4) to obtain bisphenol A diacetate (recovery amount: 26.2 mg, 0.084 mmol, yield 84%), which is obtained in accordance with the chemical reaction formula shown in Fig. 5. In other words, it was found that the synthetic resin decomposition method of the present example allows for easy and sufficient decomposition of the powdered epoxy resin (1).

### <Example 21>

Under an argon atmosphere, an epoxy monomer in which the hydrogen atoms at both ends of bisphenol A were substituted with glycidyl groups was mixed with 4,4'-diaminodiphenyl sulfone in a molar ratio of 2:1, and the resulting mixture was heated at 180°C for 5 hours to obtain cured resin. Subsequently, 385 mg (4 mmol) of sodium tert-butoxide and 2.0 mL of 3-dimethyl-2-imidazolidinone (DMI) were sequentially added to 467 mg (0.5 mmol, calculated relative to the molar weight of the monomer) of powdered epoxy resin (2) (synthetic resin consisting of 100% epoxy resin) obtained by grinding the cured resin, and the resulting reaction mixture was then stirred while being heated at 150°C for 24 hours. Thereafter, the reaction mixture was returned to room temperature (25°C), and hydrochloric acid was added.

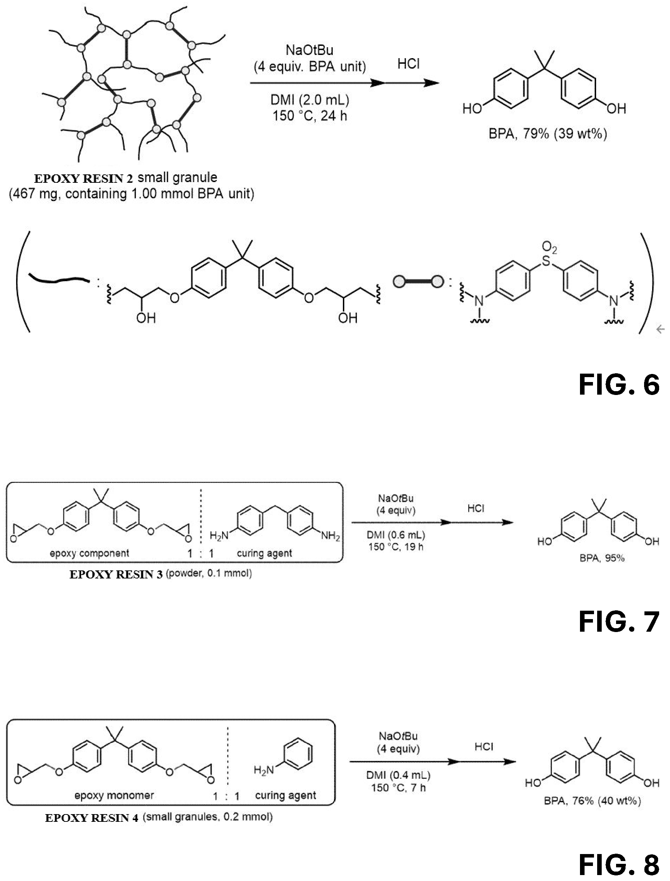

Organic matter was then extracted using ethyl acetate, and the solvent was removed by evaporation under reduced pressure to obtain a crude product. This crude product was subjected to silica gel chromatography (developing solvent: mixed solvent of hexane and ethyl acetate, volume ratio 7:3) to obtain bisphenol A (recovery amount: 180.6 mg, 0.79 mmol, yield 79%), which is obtained in accordance with the chemical reaction formula shown in Fig. 6. In other words, it was found that the synthetic resin decomposition method of the present example allows for easy decomposition of the crosslinked epoxy resin (2).

### <Example 22>

Under an argon atmosphere, an epoxy monomer in which the hydrogen atoms at both ends of bisphenol A were substituted with glycidyl groups was mixed with 4,4'-diaminophenylmethane in a molar ratio of 1:1, and the resulting mixture was heated at 180°C for 5 hours to obtain cured resin. Subsequently, 38.4 mg (0.4 mmol) of sodium tert-butoxide and 0.2 mL of 3-dimethyl-2-imidazolidinone (DMI) were sequentially added to 54.2 mg (0.1 mmol, calculated relative to the molar weight of the monomer) of powdered epoxy resin (3) obtained by grinding the cured resin, and the resulting reaction mixture was then stirred while being heated at 150°C for 19 hours. Thereafter, the reaction mixture was returned to room temperature (25°C), and pure water was added to precipitate a solid component.

Next, a solid component was separated from the aqueous solution by decanting, and hydrochloric acid was added to the solid component. Subsequently, organic matter was extracted from the solid component using ethyl acetate, and a solvent was removed by evaporation under reduced pressure to obtain a crude product. This crude product was subjected to silica gel chromatography (developing solvent: hexane/ethyl acetate 6/4) to obtain bisphenol A (recovery amount: 22 mg, 0.095 mmol, yield 95%), which is obtained in accordance with the chemical reaction formula shown in Fig. 7. It was found that the synthetic resin decomposition method of the present example allows for easy decomposition of the powdered epoxy resin (3).

### <Example 23>

Under an argon atmosphere, an epoxy monomer in which the hydrogen atoms at both ends of bisphenol A were substituted with glycidyl groups was mixed with aniline in a molar ratio of 1:1, and the resulting mixture was heated at 110°C for 24 hours to obtain cured resin. Subsequently, 77.5 mg (0.8 mmol) of sodium tert-butoxide and 0.4 mL of 3-dimethyl-2-imidazolidinone (DMI) were sequentially added to 87.2 mg (0.2 mmol, calculated relative to the molar weight of the monomer) of powdered epoxy resin (4) obtained by grinding the cured resin, and the resulting reaction mixture was then stirred while being heated at 150°C for 7 hours. Thereafter, the reaction mixture was returned to room temperature (25°C), and hydrochloric acid (2M, 0.8 mL) was added.

Subsequently, organic matter was extracted from a solid component using methylene chloride, and a solvent was removed by evaporation under reduced pressure to obtain a crude product. This crude product was subjected to silica gel chromatography (developing solvent: hexane/ethyl acetate 6/4) to obtain bisphenol A (recovery amount: 35 mg, 0.153 mmol, yield 76%), which is obtained in accordance with the chemical reaction formula shown in Fig. 8. It was found that the synthetic resin decomposition method of the present example allows for easy decomposition of the powdered epoxy resin (4).

### <Example 24>

Under an argon atmosphere, an epoxy monomer in which the hydrogen atoms at both ends of bisphenol A were substituted with glycidyl groups was mixed with ethylenediamine in a molar ratio of 1:1, and the resulting mixture was heated sequentially at 40°C for 24 hours, 80°C for 24 hours, and 100°C for 1 hour to obtain cured resin. Subsequently, 77.3 mg (0.8 mmol) of sodium tert-butoxide and 0.4 mL of 3-dimethyl-2-imidazolidinone (DMI) were sequentially added to 80.2 mg (0.2 mmol, calculated relative to the molar weight of the monomer) of powdered epoxy resin (5) obtained by grinding the cured resin, and the resulting reaction mixture was then stirred while being heated at 150°C for 7 hours. Thereafter, the reaction mixture was returned to room temperature (25°C), and hydrochloric acid (2M, 0.8 mL) was added.

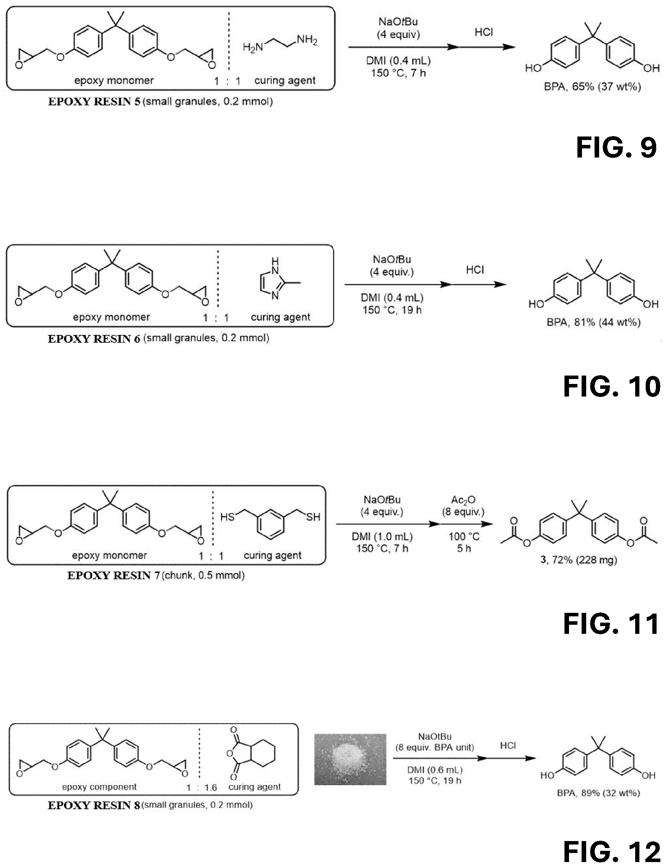

Subsequently, organic matter was extracted from a solid component using methylene chloride, and a solvent was removed by evaporation under reduced pressure to obtain a crude product. This crude product was subjected to silica gel chromatography (developing solvent: hexane/ethyl acetate 6/4) to obtain bisphenol A (recovery amount: 30 mg, 0.129 mmol, yield 65%), which is obtained in accordance with the chemical reaction formula shown in Fig. 9. It was found that the synthetic resin decomposition method of the present example allows for easy decomposition of the powdered epoxy resin (5).

### <Example 25>

Under an argon atmosphere, an epoxy monomer in which the hydrogen atoms at both ends of bisphenol A were substituted with glycidyl groups was mixed with 2-methyl-1,3-imidazole in a molar ratio of 1:1, and the resulting mixture was heated sequentially at 120°C for 2 hours and 180°C for 2 hours to obtain cured resin. Subsequently, 77.1 mg (0.8 mmol) of sodium tert-butoxide and 0.4 mL of 3-dimethyl-2-imidazolidinone (DMI) were sequentially added to 84.7 mg (0.2 mmol, calculated relative to the molar weight of the monomer) of powdered epoxy resin (6) obtained by grinding the cured resin, and the resulting reaction mixture was then stirred while being heated at 150°C for 19 hours. Thereafter, the reaction mixture was returned to room temperature (25°C), and hydrochloric acid (2M, 0.8 mL) was added.

Subsequently, organic matter was extracted from a solid component using ethyl acetate, and a solvent was removed by evaporation under reduced pressure to obtain a crude product. This crude product was subjected to silica gel chromatography (developing solvent: hexane/ethyl acetate 6/4) to obtain bisphenol A (recovery amount: 37 mg, 0.162 mmol, yield 81%), which is obtained in accordance with the chemical reaction formula shown in Fig. 10. It was found that the synthetic resin decomposition method of the present example allows for easy decomposition of the powdered epoxy resin (6).

### <Example 26>

Under an argon atmosphere, an epoxy monomer in which the hydrogen atoms at both ends of bisphenol A were substituted with glycidyl groups was mixed with 5.4 mL of 1,4-dioxane and 1,3-di(mercaptomethyl)benzene in a molar ratio of 1:1 relative to the epoxy monomer, and triethylamine (0.1 molar ratio relative to the epoxy monomer) was added and the resulting mixture was heated at 75°C for 23 hours to obtain cured resin. Subsequently, 196 mg (2.0 mmol) of sodium tert-butoxide and 1.0 mL of 3-dimethyl-2-imidazolidinone (DMI) were sequentially added to 259 mg (0.51 mmol, calculated relative to the molar weight of the monomer) of powdered epoxy resin (7) obtained by grinding the cured resin, and the resulting reaction mixture was then stirred while being heated at 150°C for 7 hours. Thereafter, the reaction mixture was returned to room temperature (25°C), 379 µL (4.0 mmol) of acetic anhydride was added, and the resulting mixture was stirred while being heated at 100°C for 5 hours.

Next, ethyl acetate was added to the reaction mixture, and after the generated solid precipitate was removed by filtration, a crude product was obtained by evaporation under reduced pressure. This crude product was subjected to silica gel chromatography (developing solvent: mixed solvent of hexane and ethyl acetate, volume ratio 7:3) to obtain bisphenol A diacetate (recovery amount: 114 mg, 0.364 mmol, yield 72%), which is obtained in accordance with the chemical reaction formula shown in Fig. 11. In other words, it was found that the synthetic resin decomposition method of the present example allows for easy and sufficient decomposition of the powdered epoxy resin (7).

### <Example 27>

Under an argon atmosphere, an epoxy monomer in which the hydrogen atoms at both ends of bisphenol A were substituted with glycidyl groups was mixed with hexahydroisobenzofuran-1,3-dione in a molar ratio of 1:1.6. After heating the resulting mixture at 100°C for 10 minutes, 0.75 mol% of tetraphenylphosphonium bromide relative to the epoxy monomer was added and heated at 100°C for 10 minutes, followed by heating the mixture at 130°C for 4 hours to obtain cured resin. Subsequently, 154 mg (1.6 mmol) of sodium tert-butoxide and 0.6 mL of 3-dimethyl-2-imidazolidinone (DMI) were sequentially added to 117 mg (0.2 mmol, calculated relative to the molar weight of bisphenol A unit) of powdered epoxy resin (8) obtained by grinding the cured resin, and the resulting reaction mixture was then stirred while being heated at 150°C for 19 hours.

Thereafter, the reaction mixture was returned to room temperature (25°C), and hydrochloric acid was added. Organic matter was then extracted using ethyl acetate, and the solvent was removed by evaporation under reduced pressure to obtain a crude product. This crude product was subjected to silica gel chromatography (developing solvent: mixed solvent of hexane and ethyl acetate, volume ratio 6:4) to obtain bisphenol A (recovery amount: 42 mg, 0.18 mmol, yield 89%), which is obtained in accordance with the chemical reaction formula shown in Fig. 12. In other words, it was found that the synthetic resin decomposition method of the present example allows for easy decomposition of the crosslinked epoxy resin (8) derived from a crosslinked acid anhydride curing agent.

### <Example 28>

Under an argon atmosphere, an epoxy monomer in which the hydrogen atoms at both ends of bisphenol A were substituted with glycidyl groups was stirred with a rotor introduced, while being heated at 130°C, and bis(acetoacetoxy)zinc (a molar ratio of 0.05 relative to epoxy monomer) was added, followed by further stirring. After cooling the resulting reaction liquid to 80°C, glutaric anhydride was mixed in a molar ratio of 1:1 relative to epoxy monomer, and bubbles were removed by heating the reaction liquid at 80°C under reduced pressure. Subsequently, the reaction liquid was sequentially heated at 130°C for 4 hours and at 160°C for 2 hours to obtain cured resin. Subsequently, 231 mg (2.4 mmol) of sodium tert-butoxide and 0.6 mL of 3-dimethyl-2-imidazolidinone (DMI) were sequentially added to 137 mg (0.3 mmol, calculated relative to the molar weight of the monomer) of powdered epoxy resin (9) obtained by grinding the cured resin, and the resulting reaction mixture was then stirred while being heated at 150°C for 7 hours.

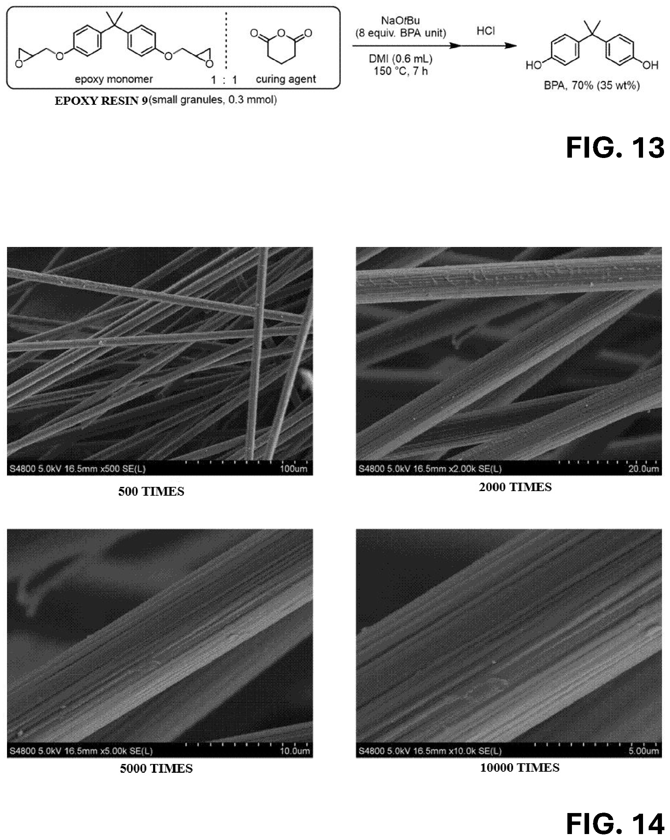

Thereafter, the reaction mixture was returned to room temperature (25°C), and 2.4 mL of 2M hydrochloric acid was added. Subsequently, organic matter was extracted from the solid component using ethyl acetate, and a solvent was removed by evaporation under reduced pressure to obtain a crude product. This crude product was subjected to silica gel chromatography (developing solvent: hexane/ethyl acetate 6/4) to obtain bisphenol A (recovery amount: 48 mg, 0.201 mmol, yield 70%), which is obtained in accordance with the chemical reaction formula shown in Fig. 13. It was found that the synthetic resin decomposition method of the present example allows for easy decomposition of the powdered epoxy resin (9).

### <Example 29>

Under an argon atmosphere, 96.5 mg (1.0 mmol) of sodium tert-butoxide and 4.0 mL of 3-dimethyl-2-imidazolidinone (DMI) were sequentially added to a 432 mg piece of commercially available carbon fiber reinforced epoxy resin (10) (Cat. No. JISK6850AJAA01), and the resulting reaction mixture was then stirred while being heated at 150°C for 23 hours. Thereafter, the reaction mixture was returned to room temperature (25°C), and 3.0 mL of 2M hydrochloric acid was added to quench the reaction. Ethyl acetate was then added to the reaction mixture.

First, carbon fibers were separated from the obtained solution. The carbon fibers were then taken out, thoroughly washed with water, methanol, and acetone in this order, and vacuum-dried at room temperature (25°C). After that, the carbon fibers were dried at 115°C, and the mass of the carbon fibers was measured to be 285 mg. Further, the surface of the recovered carbon fibers was measured using SEM. The results are shown in Fig. 14. The analysis result of these SEM images revealed that the carbon fibers were able to be recovered without damaging their surfaces.

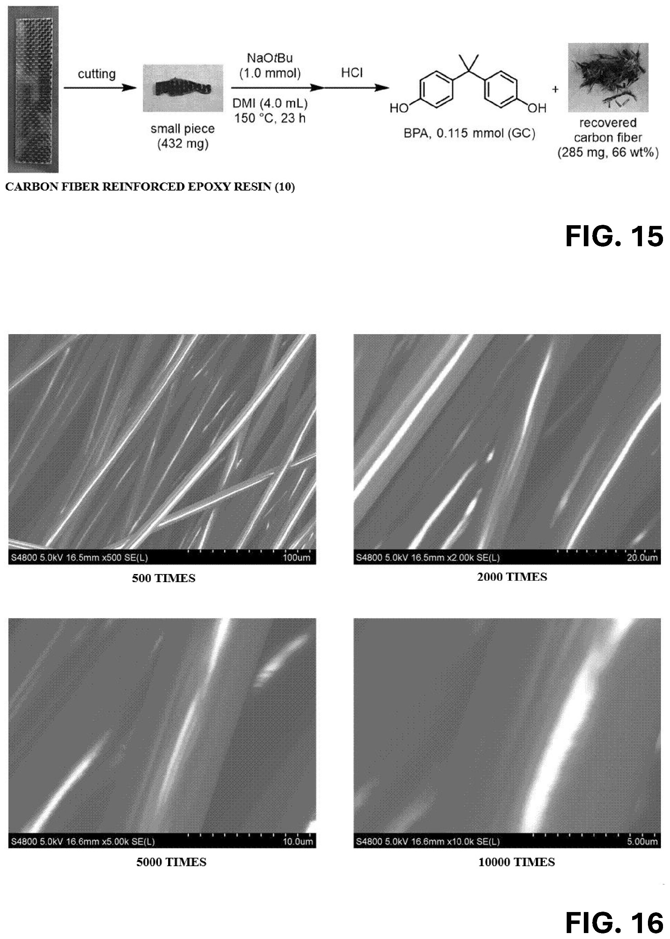

Next, an organic layer was separated from the solution remaining after the carbon fibers were recovered, and then evaporation under reduced pressure was performed. Subsequently, using mesitylene as an internal standard substance and performing measurement by gas chromatography, it was found that 0.115 mmol of bisphenol A, which is obtained in accordance with the chemical reaction formula shown in Fig. 15, was obtained. In other words, it was found that the synthetic resin decomposition method of the present example allows for easy decomposition of the epoxy resin (10) contained in commercially available carbon fiber reinforced epoxy resin.

### <Example 30>

Under an argon atmosphere, 98.1 mg (1.0 mmol) of sodium tert-butoxide and 4.0 mL of 3-dimethyl-2-imidazolidinone (DMI) were sequentially added to a 534 mg piece of commercially available glass fiber reinforced epoxy resin (11), and the resulting reaction mixture was then stirred while being heated at 150°C for 23 hours. Thereafter, the reaction mixture was returned to room temperature (25°C), and 3.0 mL of 2M hydrochloric acid was added to quench the reaction. Ethyl acetate was then added.

First, glass fibers were separated from the obtained solution. The glass fibers were then taken out, thoroughly washed with water, methanol, and acetone in this order, and vacuum-dried at room temperature (25°C). After that, the glass fibers were dried at 115°C, and the mass thereof was measured to be 347 mg. Further, the surface of the recovered glass fibers was measured using SEM. The results are shown in Fig. 16. The analysis result of these SEM images revealed that the glass fibers were able to be recovered without damaging their surfaces.

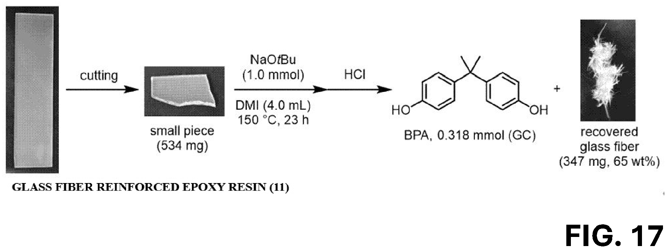

Next, an organic layer was separated from the solution remaining after the glass fibers were recovered, and then evaporation under reduced pressure was performed. Subsequently, using mesitylene as an internal standard substance and performing measurement by gas chromatography, it was found that 0.318 mmol of bisphenol A, which is obtained in accordance with the chemical reaction formula shown in Fig. 17, was obtained. In other words, it was found that the synthetic resin decomposition method of the present example allows for easy decomposition of the epoxy resin (11) contained in commercially available glass fiber reinforced epoxy resin.

### (Other embodiments)

From the above-described examples, those skilled in the technical field of the present invention will understand that even epoxy resins included in the present invention but not described in the examples can be decomposed by using the synthetic resin decomposition method of the present invention.

Further, from the above-described examples, those skilled in the technical field of the present invention will understand that even bases included in the present invention but not described in the examples can be used to decompose epoxy resins included in the present invention by using the synthetic resin decomposition method of the present invention.

Furthermore, from the above-described examples, those skilled in the technical field of the present invention will understand that even organic solvents included in the present invention but not described in the examples can be used to decompose epoxy resins included in the present invention by using the synthetic resin decomposition method of the present invention.

## Claims

1. A synthetic resin decomposition method for decomposing synthetic resin which contains epoxy resin obtained by bonding
an epoxy resin monomer, the epoxy resin monomer being represented by at least one of chemical formulae (A1) to (A8) and having an epoxy group, with
at least one of a diamine compound, a monoamine compound, an acid anhydride, a dithiol compound, and an imidazole compound which can bond to the epoxy group,
the synthetic resin decomposition method comprising:
a decomposition process for decomposing the epoxy resin contained in the synthetic resin by mixing
the synthetic resin,
a base, and
an organic solvent containing at least one of 1,3-dimethyl-2-imidazolidinone, 1,3-dimethylpropylene urea, tetramethylurea, N,N-dimethylacetamide, N,N-dimethylformamide, N-methyl-2-pyrrolidone, and dimethyl sulfoxide. 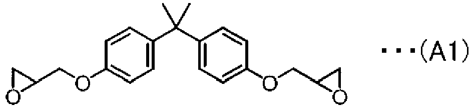 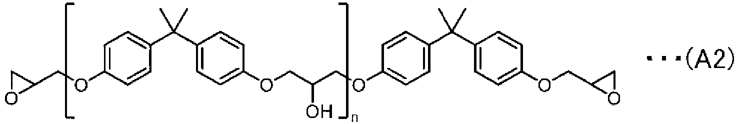 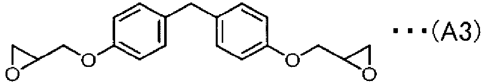 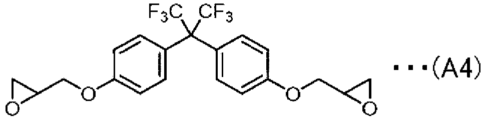 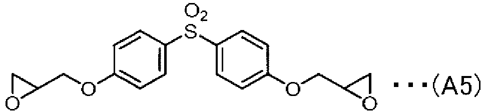 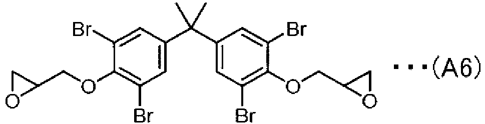 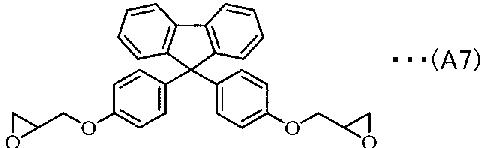 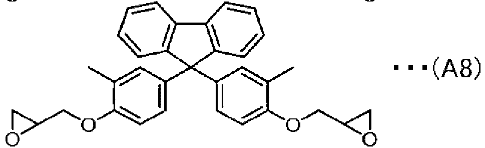
(n represents an arbitrary natural number in the chemical formulae above.)

2. The synthetic resin decomposition method according to claim 1, wherein
an amount of the organic solvent is a molar concentration of 0.1 to 5 relative to a unit mole of the epoxy resin monomer.

3. The synthetic resin decomposition method according to claim 1, wherein
the base includes at least one of sodium hydroxide, potassium hydroxide, cesium hydroxide, sodium tert-butoxide, lithium tert-butoxide, potassium tert-butoxide, lithium bistrimethylsilylamide, sodium bistrimethylsilylamide, and potassium bistrimethylsilylamide.

4. The synthetic resin decomposition method according to claim 1, wherein
an amount of the base is 2 to 12 equivalents relative to an amount of an epoxy resin monomer structural unit represented by at least one of chemical formulae (a1) to (a8) and used to obtain the epoxy resin. 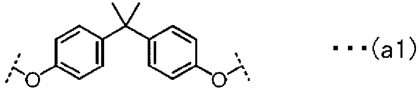 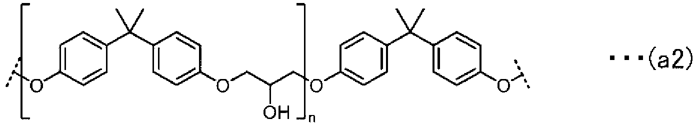 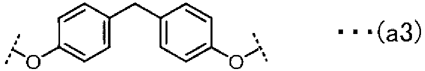 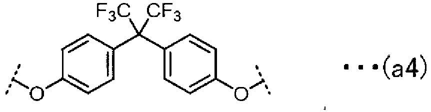 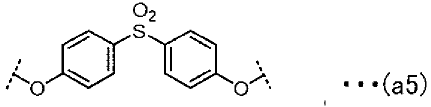 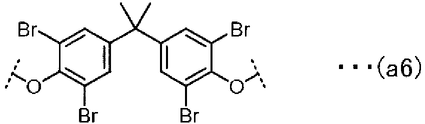 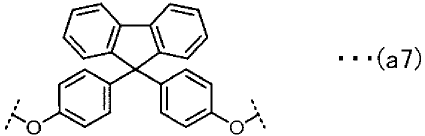 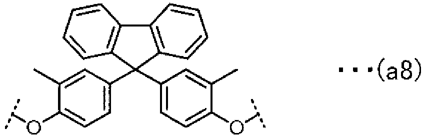
(n represents an arbitrary natural number in the chemical formulae above.)

5. The synthetic resin decomposition method according to any one of claims 1 to 4, wherein
the diamine compound is a compound represented by chemical formulae (B1) to (B7),
the monoamine compound is a compound represented by chemical formula (B8),
the acid anhydride is a compound represented by chemical formulae (B9) and (B10),
the dithiol compound is a compound represented by chemical formula (B11), and
the imidazole compound is a compound represented by chemical formula (B12).

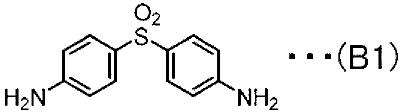

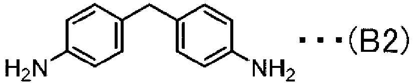

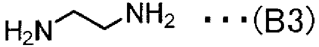

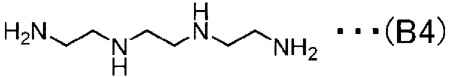

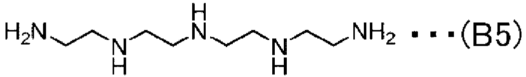

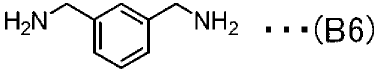

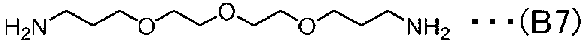

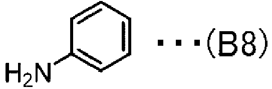

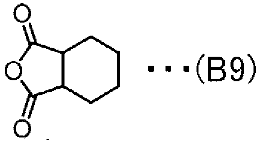

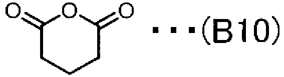

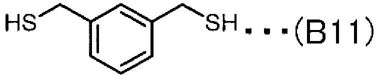

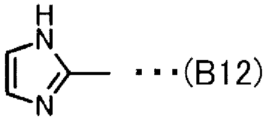

6. The synthetic resin decomposition method according to claim 1, wherein
a reaction temperature during the decomposition process is within a range of 100°C to 160°C.
